# EUROPEAN PATENT APPLICATION

(11) **EP 4 644 725 A1**
(43) Date of publication of application: **05.11.2025**
(21) Application number: 25174065.0
(22) Date of filing: 02.05.2025
(51) Int. Cl.: F16F 6/00, F16F 3/04, F16F 15/02, H04R 1/02

(54) **A VIBRATION ISOLATOR FOR AUDIO EQUIPMENT**

(30) Priority: 03.05.2024 EP 24174091
(71) Applicant: Solid Tech AB, 213 77 Malmö (SE)
(72) Inventor: Friman, Marcus, 236 36 Höllviken (SE)
(74) Representative: Brann AB

(57) **Abstract**

A vibration isolator (10) to support an audio equipment (110) that vibrates or is sensitive to vibrations, the vibration isolator comprising,
a base (14) and a top (12), the base (14) is adapted, or arranged, to be placed on a surface (104), and the top (12) is adapted, or arranged, to engage and support the audio equipment (110),
wherein the top (12) and base (14) are positioned relative to each other and define a central axis (100) transverse to the surface (104), and
an isolator assembly that couples the top (12) to the base (14) and vibration isolates the top (12) from the base (14) and at least partly inhibit the transfer of vibrations between the top (12) and the base (14), and
the isolator assembly comprises a plurality of springs (24) and a plurality of permanent magnets (22), wherein each of the plurality of springs forms a pair with one of the plurality of magnets, wherein the spring and magnet of each pair are aligned with, and coaxial to, each other, wherein
the plurality of springs (24) biases the top (12) apart from the base (14) in the axis direction (100), and
the plurality of magnets (22) biases the top (12) towards the base (14), in the axis direction (100).

## Description

### Technical field

The proposed technology relates generally to the technical field of audio equipment and in particular to vibration isolation audio equipment that produces vibrations or is sensitive to receiving vibrations.

### Background

Audio equipment, such as record players or speakers, may generate vibrations during use. The vibrations may transfer to the surface or object the audio equipment is supported on. This may lead to unwanted sounds being emitted from the surface or object, and the unwanted sounds may mix with the sound of emitted by the audio equipment itself. This reduces the clarity of the sound and results in a poor listening experience. In addition, vibrations from the surface or object the audio equipment is supported on may transfer to the audio equipment and in the case of a record player, negatively affect the playing, or decoding, or reading, of the record by the record player.

To reduce the above effect the audio equipment may be placed onto a damper that dampens or attenuates the transfer of vibrations to and from the audio equipment and the surface or object the audio equipment is supported by.

One such example is the use of vibration damping feet that are attached to the audio equipment. Each foot has an upper surface that contacts and supports the audio equipment and a lower surface that is placed on, and is supported, by a surface, or object, such as a floor, or furniture.

Such feet comprise an elastomer or rubber damper arranged to isolate, or dampen, vibrations. A problem with such feet that have elastomer or rubber dampers are that they dampen vibrations in a narrow range only. A bulk of the vibrations may still transfer from or to the audio equipment. In addition, the use of a single material for damping vibrations makes it hard to adjust or configure the feet to dampen a specific range of frequencies. In addition, such feet are configured to provide optimal damping when the feet are loaded around 90%-100% within the maximum load capacity of the feet. When loaded below 90%, for example at 50% of maximum load capacity the damping performance of the feet is reduced.

Accordingly, there is a need to provide an improved vibration isolation solution, that is better suited for audio equipment, that at least partly overcomes the above problems.

### Object

The proposed technology aims at obviating the aforementioned disadvantages and failings of previously known technologies. In particular, it is an object of the invention to provide a vibration isolator, such as an audio equipment foot, that reduce the transfer of vibrations in a broad frequency range between the audio equipment and the surface the isolator rests on. In addition, there is a desire to provide a vibration isolator that may be easily configured to support audio equipment of different types and weight.

### Summary

According to a first aspect, a vibration isolator is provided, that supports an audio equipment that vibrates or is sensitive to vibrations, the vibration isolator comprising, a base and a top, the base is adapted, or arranged, to be placed on a surface, and the top is adapted, or arranged, to engage and support the audio equipment, wherein the top and base are positioned relative to each other and define a central axis transverse to the surface, and an isolator assembly that couples the top to the base and vibration isolates the top from the base and at least partly inhibits the transfer of vibrations between the top and the base, and the isolator assembly comprises a plurality of springs and a plurality of permanent magnets, wherein each of the plurality of springs forms a pair with one of the plurality of magnets, wherein the spring and magnet of each pair are aligned with, and coaxial to, each other, the plurality of springs biases the top apart from the base, in the axis direction, and the plurality of magnets biases the top towards the base, in the axis direction.

It is understood that vibration isolation is the prevention of transmission of vibrations from one component of a system to other parts of the same system, such as in buildings or mechanical systems. It is further understood that vibrations propagate via mechanical waves and certain mechanical linkages conduct vibrations more efficiently than others. Passive vibration isolation makes use of materials and mechanical linkages that absorb and damp these mechanical waves. Active vibration isolation involves sensors and actuators that produce disruptive interference that cancels-out incoming vibration.

It is understood that the present vibration isolator is a passive vibration isolator for use with audio equipment. During use a plurality of vibration isolators may be mounted to, and support, the audio equipment.

It is specified that the vibration isolator is to be used for isolating, audio equipment that vibrates or is sensitive to received vibrations, from a support surface, such as a flat surface.

The audio equipment may be a speaker, a recorded media player that plays, or decodes, audio information such as recorded songs that are stored on a sound storage medium. For example, the sound storage medium may be a record, or phonograph record, or gramophone record, or vinyl record. In addition, the vibration isolator may be mounted to a rack, or shelf, that an audio equipment is placed on.

The isolator assembly comprises a plurality of springs and a plurality of magnets. The combination of spring and magnet may provide and improved mechanical vibration isolation combined with magnetic oscillation damping. This further reduces, or at least partly inhibit, the transfer of vibrations between the top and the base of the vibration isolator.

It is contemplated, or considered, that the isolator assembly may also dampen vibrations to an extent by the eddy currents generated in the springs as the springs are compressed and elongated, in the magnetic fields generated by the magnets, by the applied vibrations.

The vibration isolator has a base that is adapted, or arranged, to be placed on a surface, such as a flat surface. The surface may define a plane. For example, the surface may be furniture, a floor surface, a cabinet or a cupboard.

The vibration isolator has a top that is adapted, or arranged, to engage and support a load from an audio equipment that vibrates or is sensitive to vibrations. Thereby the vibration isolator prevents transmission, or transfer, of vibrations that originate on the surface the base is positioned onto, to the audio equipment. In addition, the vibration isolator prevents transmission, or transfer, of vibrations that originates in the audio equipment, to the surface the base is positioned onto. For example, the vibration isolator may support and isolate a speaker from transferring vibrations from the speaker to furniture the speaker and vibration isolator is placed onto.

It is understood that the vibration isolator is arranged to isolate vibrations between the top and the base that has a frequency in the range of 10-500 Hz, preferably in the ranged of 10- 150 Hz, more preferably in the range of 10-115 Hz.

It is specified above that the plurality of springs biases the top apart from the base, in the axis direction. It is also specified above that the plurality of magnets biases the top towards the base. The magnets and the springs thereby bias the top relative to the base in opposite directions. The spring biases the top relative to the base, such that the top is biased, or pushed, apart from the base. This means that the springs act to increase a distance between the top and the base. This also means that the magnets biases the top towards the base. The magnets may form a magnetic field that acts to reduce the distance between the top and the base. The magnetic field thus forms an attraction, or attractive, force between the top and the base. The magnets may be arranged, or mounted, to the top. Alternatively, the magnets may be arranged, or mounted, to the base.

It is specified above that the top and base are positioned relative to each, with the top arranged above the base, and that the top and base thereby define, or are aligned about, a central axis. The central axis may be transverse, or perpendicular, to the surface, or plane. Worded differently, the top may define a central first axis. The base may define a central second axis. The top may be arranged to the base, or on top of the base, with the isolator assembly coupling, or connecting, the top to the base, wherein the central first axis may be coaxial to the central second axis. The first axis and the second axis may jointly define the central axis. Worded differently, the top may be positioned, or arranged, above the base, and the top and base may be aligned about the central axis.

The base may comprise an upper side and a lower side. The lower side may define a support surface for the base and the vibration isolator. The lower side may be arranged to be placed on, and contact, the surface, the vibration isolator is placed on. The lower side may define, or lie, in the plane. This means that at least a part of the lower side of the base intersects the plane. The intersect may form a circle on the plane. The lower side may be planar. Alternatively, the lower side may be concave, and define a support ridge, or protrusion, that is arranged to contact, the surface the base is placed onto during use. The support ridge may be annular.

The base may define, or have the shape of, a cylinder that has one end open. Alternatively, the base may have the shape of a truncated cone, with the base facing away from the top. The base may have a bottom and a sidewall that protrudes from the bottom. The bottom may comprise the lower side of the base. The bottom may further have an inner bottom surface. The base, and the sidewall, may be open at the opposite side from the bottom. Worded differently, the bottom may form a first end of the cylinder, the sidewall may define the side of the cylinder, and the opposite end of the cylinder may be devoid of an end and thus be open. The sidewall may protrude in a direction transverse to the lower side, the inner bottom surface, or the surface the vibration isolator is placed onto during use. Worded differently, the sidewall may protrude in a direction parallel to, or aligned with, the central axis defined by the top and the base. The sidewall may thus be transverse to the plane the lower side defines, or lies in. The sidewall may protrude from the bottom in a direction towards the top.

The sidewall may define the curved surface of a cylinder. The sidewall of the base may have an inner diameter and an outer diameter.

At the open end of the base, the sidewall may form a rim. The rim may have a rim surface. The rim surface may be transverse to the sidewall. The rim surface may be rounded, or convex. The rim surface may be chamfered. The rim, or rim surface, may have a thickness that may be wider than a wall thickness of the sidewall.

The rim may comprise a protrusion that protrudes radially outwards at the rim and forms an overhang. The overhang may form a first part of a lock that locks the base to the top after assembly of the vibration isolator.

The base may be made from a metal or a plastic. The metal may be aluminium or steel. The base may be made from a ferromagnetic material. It is specified above that the magnets may be arranged, or mounted, to the top. When the magnets are arranged to, or mounted to, the top, the base may be of a ferromagnetic material that interacts with the magnets to bias the top towards the base. Alternatively, the base may be made from a non-ferromagnetic material. It is specified above that the magnets may be arranged to, or mounted to, the top. When the magnets are arranged to the top, the base may comprise an insert. The insert may be a ferromagnetic insert. The insert may be made from steel. The insert may be an annular disc. The insert may interact with the magnets to bias the top relative to the base.

The base may be machined, such as milled, from a solid block of material, or blank. Alternatively, the base may be formed by casting.

The base may comprise a foot attached to the bottom that forms the lower side of the base and contacts the surface the base is placed on. The foot may be made from a rubber or elastomer such as a synthetic rubber, or polyterpene. In a further example, the foot may be made from urethane or polyurethane. Together with the vibration isolator, the foot may provide additional vibration isolation and attenuation, or damping of vibrations.

The top may have a top portion with an outer top surface. The top may have a sidewall that protrudes from the top portion. It is understood that the outer top surface faces the audio equipment supported by the vibration isolator. The top may define, or have the shape of, a cylinder. Alternatively, the top may have the shape of a truncated cone, wherein the cone base faces the truncated cone portion, or apex, or top of the base. The top may have an opening, arranged at an end of the top that is opposite from the top portion, or top surface. The sidewall may protrude from the top portion. The top portion may have a cylinder bottom with an inner bottom surface. The sidewall may protrude from the bottom. The bottom inner surface may face in a first direction and the top surface may face in a second direction, the second direction being opposite the first direction. The top portion may thereby comprise the bottom surface and the outer top surface.

The sidewall and the inner bottom surface of the top may define a cylindrical inner recess, or volume. The sidewall may define an inner diameter and an outer diameter. Worded differently, the inner recess may have an inner diameter transverse to the central axis of the top. The inner recess may have a depth, from the opening to the inner bottom surface. The depth may be 25-75% of the height of the base. Alternatively, the depth may be 75%-125% of the height of the sidewall of the base. This allows for at least a portion of the base to be received in the inner recess of the top.

The bottom surface may face the base when the top and bottom are assembled to form the vibration isolator.

The outer diameter of the base, or the sidewalls of the base, may be smaller than the inner diameter of the top.

The top and base may conform in shape such that the sidewalls of the base may be at least partly received within the opening of the top. Worded differently, the sidewalls of the base may be at least partly received in the recess formed by the sidewalls and bottom of the base.

Alternatively, the top and base may conform in shape such that the sidewalls of the top may be at least partly received within the opening of the base. Worded differently, the sidewall of the base may be at least partly enclosed by the sidewall of the top.

It is specified above that the top and base may be positioned relative to each other when the vibration isolator is assembled. Worded differently, the top is mounted, or engages, the base and the connection between the top and base allow axial, parallel to the central axis, movement between the top and base. This means that the connection allows for movement of the top relative to the base at least in a direction parallel to, or aligned with, the central axis. The effect is that loading forces, or weight, from the audio equipment is transferred to the base through the isolator assembly. It is understood that the above arrangement reduces, or minimizes, or eliminates, the transfer of vibrations directly between the top and base. Instead, vibrations between the top and base are transferred and isolated by the isolator assembly.

It is specified above that the sidewall and the inner bottom surface of the top may define a cylindrical inner recess, or volume. The inner recess of the top may be arranged to receive at least a part of the sidewall of the base. The inner recess of the top may have a diameter that matches the outer diameter of the sidewall of the base. This means that the recess may receive the base sidewall. The base sidewall outer diameter may be smaller than the inner recess wall diameter and a gap may be formed between the base side wall and the recess wall. The gap may be in the range of 0.25-5 mm.

The sidewall of the base may define an annular edge, or rim. The annular edge may be unbroken, or continuous around the rim of the base. The annular edge may be broken. This means that the annular edge is formed by a plurality of evenly spaced apart, along the rim, protrusions. The annular edge, or rim, may have a lip. The lip may protrude radially outwards from the sidewall relative to the central axis.

It is understood that radially outwards is in a direction transverse to the sidewall, or parallel to the surface the base is placed onto during use, or the plane.

The top rim may define an overhang formed by a protrusion that protrudes radially outwards from the sidewall at the rim. Worded differently, the top inner recess sidewall may have a lip, or plurality of protrusion, that protrude radially inwards from the inner recess sidewall. The overhang, or lip, may form a second part of a lock that locks the top to the base. The second part of the lock, or the top overhang, or lip, may interact with the first part of the lock, overhang, or lip, of the base, to lock the base to the top when the vibration isolator is assembled.

By lock is meant that the disassembly of the top from the base is prevented, wherein the top may still move in the central axis direction between a first position and a second position, wherein at the second position, the first part of the lock engages the second part of the lock. Worded differently, the lock may lock the top to the base at an end position of the top relative to the base in the axial direction. This has the effect to prevent the biasing force from the springs and magnets from pushing the top and base apart when the vibration isolator is unladen or not loaded. This allows for a higher biasing force to be achieved and thereby for the vibration insulator to support objects, or equipment, with a higher weight.

In a further embodiment the first part of the lock and the second part of the lock may form threads, and the assembly, or disassembly, of the top to the base may be made by threading the top to the base.

It is specified above that the magnets may be arranged to the base. When the magnets are arranged to the base, the top may comprise the ferromagnetic insert. The insert may be made from steel. The insert may be an annular disc. The insert interacts with the magnets to bias the top relative to the base.

The top may be made from a metal or a plastic. The metal may be aluminium or steel. It is understood that the material may be non-ferromagnetic. It is further understood that the material may be ferromagnetic. When the magnets are arranged to the base, and the material of the top is ferromagnetic, the top may be devoid of the ferromagnetic insert.

The top may be machined, such as milled, from a solid block of material, or blank. Alternatively, top base may be formed by casting. It is further understood that using a metal is advantageous in that it blocks magnetic fields from affecting equipment arranged external to the vibration isolator. In one example embodiment, both the top and the base are made, or manufactured, from a metal.

It is specified above that the vibration isolator comprises an isolator assembly and that the isolator assembly couples, or connects, the base to the top and is arranged to reduce the transfer of vibrations between the top and the base. It is understood that the isolator assembly may isolate the transfer of vibrations both from the top to the base, and from the base to the top.

It is further specified that the isolator assembly comprises plurality of springs and a plurality of magnets. The springs and the magnets biases the top in relation to the base in the central axis direction, towards each other.

It is specified above that the isolator assembly comprises a plurality of springs and a plurality of permanent magnets, wherein each of the plurality of springs forms a pair with one of the plurality of magnets, wherein each pair of springs and magnets may be aligned and coaxial. Each magnet may form a pair with one of the plurality of springs. Worded differently, the number of springs and the number of magnets may be equal. This means that each pair may comprise one spring and one magnet. This further means that the number of springs is equal to the number of magnets. For example, the isolator assembly may comprise 7 springs and 7 magnets and a respective spring may form a pair with a respective magnet. Alternatively, the number of springs may be less than the number of magnets. This means that there are fewer pairs of springs and magnets than the total number of magnets.

A central axis of a magnet that forms a pair with a spring may be aligned and coaxial with a central axis of the spring. In one example, the isolator assembly may comprise one or more springs. In one example, the isolator assembly may comprise one or more magnets. It is understood that a central axis of each magnet may be aligned and coaxial with a central axis of each spring.

The magnets may be arranged to, or in, the top. Alternatively, the magnets may be arranged to the base. It is understood that the isolator assembly may allow movement of the top relative the base in at least the central axis direction.

However, it is also understood that the isolator assembly may allow some movement of the top relative the base in at least a direction transverse to the central axis direction, or in a plane. The vibration isolator may thus vibration isolate transverse to the central axis, or in a direction parallel to the plane.

It is specified above that that the springs and the magnets bias the top in relation to the base in the axis direction. It is understood that the springs bias the top relative to the base. The springs are elastic springs that follow Hooke's law. Worded differently, the springs deform elastically and not plastically when compressed or elongated axially. When the springs are compressed or stretched from an initial or resting position, they will exert an opposing force approximately proportional to its change in length.

The springs may be coil or helical springs made out of a piece of material that is wound around itself following a helical curve. For example, the springs may be conical helical springs, hourglass shaped helical springs, constant pitch helical springs, barrel shaped helical springs or variable pitch springs. Each spring may define a spring axis that is aligned with, or parallel to, the central axis. The springs are thus arranged to be loaded in a direction parallel to the central axis. The springs are preferably metal springs.

It is specified above that the vibration isolator comprises a plurality of springs. The vibration isolator may comprise a plurality of springs such as between 3 and 9 springs, preferably between 5 and 9 springs, such as 7 springs. It may be advantageous to use a plurality of springs as the number of springs may be adapted to the load the vibration isolator is to carry. The springs may be the same springs, sharing mechanical properties, such as spring constant. It is understood that the spring properties may depend on the diameter of the spring, the material of the spring, the cross-sectional diameter of the spring. For example the spring properties may be any of the diameter of the spring, the spring material or material making up the spring, or the cross sectional diameter of the spring material, such as spring wire, making up the spring. Worded differently, the spring properties may be material properties or depend on geometric properties of the spring. It is further understood that the rate or spring constant of a spring is the change in the force it exerts, divided by the change in deflection of the spring. That is, it is the gradient of the force versus deflection curve. It is understood that spring constant may also be referred to as spring stiffness, or ability to withstand compression for a specific applied load.

Alternatively, the springs may be different and have different spring properties. Worded differently, the vibration isolator may comprise a first set of springs and a second set of springs, wherein the first set of springs has different properties relative to the second set of springs. For example, the springs may comprise a combination of springs with different properties. In addition to the above, the vibration isolator may comprise a third set of springs that has properties different from both the first set of springs and the second set of springs. This is advantageous since the number of springs, and the spring properties of springs may be better tailored for audio equipment with different weight and to isolate for specific vibration frequencies.

For example, the springs may comprise a combination of strong springs that has a first, or high, spring constant and weak springs that has a second, or low, spring constant. The second spring constant may be lower than the first spring constant.

In a further example, the springs of the third set of springs may have different properties relative to the second set of springs and the first set of springs. Worded differently, the third set of springs may be medium springs, that have a third, or medium, spring constant. The third, or medium, spring constant may be higher than the low spring constant and lower that the high spring constant.

Each spring may have a spring constant selected to take a load of 0,5-1,5kg per spring at a 25%-50% compression of each spring.

The first set of springs, the second set of springs and the third set of springs may be manufactured from the same material. The second set of springs may have a spring material or wire diameter that is 0,15 to 0,30, such as 0,25 mm, higher than the diameter of the first set of springs. The third set of springs may have a spring wire diameter that is 0,15 to 0,30, such as 0,25 mm, higher than the diameter of the second set of springs.

It is specified above that vibration isolator may comprise a plurality of springs such as 7 springs. A plurality of different combinations of first set of springs, second set of springs and third set of springs may thereby result. It is also specified above that the audio equipment may be a sound speaker. It is understood that when the audio equipment is a sound speaker, the subset of springs with the higher spring constant may be positioned so that an axis defined by the higher subset of springs with the higher spring constant is aligned with axis of the speaker cone. This may be advantageous in that the higher spring constant springs are better adapted to isolate from the speaker's motive forces, that act in the plane.

The magnets may be arranged above the springs or below the springs. It is understood that the magnet produces a magnetic field and that the magnets are permanent magnets. It is further understood that the magnets may dampen the movement of the springs. Each magnet has a north magnetic pole and a south magnetic pole, or a positive and a negative magnetic pole. The magnets may be arranged to, or mounted and secured to, the top or the base.

The magnets may be high-capacity neodymium magnets, or NdFeB, NIB or Neo magnets. The use of high-capacity neodymium magnets allows for a compact vibration isolator. The magnets may be disc, or cylindrical shaped. This is advantageous in that the springs and magnets conform in shape relative to the diameter of the springs and magnets. In one example, the magnets have a diameter that is between 10 mm to 20 mm, such as 14 mm. The magnets may have a height transverse to the diameter that is 3-5 mm, such as 4 mm.

Alternatively, the magnets may be cube or prism shaped. The magnets may then have a width, along a longest side of the cube or prism, that is 10 mm to 20 mm, such as 14 mm. The magnets may have a height transverse to the width that is 3-5 mm, such as 4 mm.

It is specified above that the magnets may apply a biasing force on the springs, or the top. The biasing force may be a pulling, or tension, force that acts on the top, relative the base. Worded differently, the magnet, or magnets, may bias the top together with the base, in the axis direction. This means that the biasing force acts to pull the top closer to the base.

In one embodiment the magnets may bias the top towards the base, in the axis direction, and that the springs may bias the top apart from the base. The springs and the magnets thereby apply a respective force in opposite directions. It is understood that the this improves, or reduces, decay time for vibrations.

It is understood that each magnet may be aligned with and coaxial to a spring, and form a biasing pair with the spring. Worded differently, a central axis of a magnet may be align with, and be coaxial to, a central axis of a spring.

This enables easy disassembly and assembly of the vibration isolator, for example to replace springs to springs with other spring properties, as the magnet of each pair attracts and holds the spring in place relative to the magnet. In addition, the magnets may aid in locating, or positioning the springs, by holding the springs against the magnets by magnetic force. For example, when springs are replaced they may be positioned relative to the magnets, and the magnets may secure the springs during assembly of the top to the base.

It is specified above that the magnets may be arranged, or mounted, to the top or to the base. The top may comprise a magnet insert that position, and mount, a plurality of magnets, and maintains the magnets in a set position.

The magnet insert for the magnets may be positioned in a recess in the inner bottom of the top. The magnet insert may have a plurality of recesses that locate, or position, the magnets. The recesses may define the central axis of the magnet, that may be coaxial with the central axis of the spring, of the pair of springs and magnets. It is further understood that the plurality of magnets may be arranged to the top, and the base may comprise a first insert that position, and mount, a plurality of springs. The first insert may thus be a spring insert. It is understood that the first insert may be a ferromagnetic insert, that interacts with the plurality of magnets, arranged in the top. Worded differently, the first insert that positions, and mounts, the plurality of springs, may be ferromagnetic and may act with the plurality of magnets to bias the top towards the base. The first insert may thus constitute, or replace, the ferromagnetic insert discussed above. In addition, the top may comprise a second insert that positions, and mounts, a plurality of springs to the top. The second insert may thus be a spring insert. The top may comprise a cover that covers the magnets. The cover may be non-ferromagnetic, or at least partly non-ferromagnetic. For example, the cover may be made of aluminium. It is specified above that the top may comprise the magnet insert that position, and mounts, a plurality of magnets and that the top may comprise a second insert that positions, and mounts, a plurality of springs to the top. The cover may be arranged between the magnet insert and the second insert.
Alternatively, the base may comprise the magnets and the magnet insert that positions, or mounts, the plurality of magnets, and maintains the magnets in position relative the base. This means that the magnets are arranged to, or mounted to, the base. The second insert arranged to the top may then be a ferromagnetic insert, that interacts with the magnets, arranged in the base. Worded differently, the plurality of magnets, may be arranged, or mounted to, the base, and the top may comprise the ferromagnetic insert that interacts with the magnets, to bias the top relative to, or towards, the base. The second insert may thus constitute the ferromagnetic insert discussed above. This means that the top is devoid of the magnetic insert, and that the second insert forms, or has the function, of the magnetic insert.

The first insert and the second insert may be made from a plastic material or a metal material. It is understood that when the first insert and the second insert are made from a plastic material, the plurality of magnets may be arranged to, or mounted to, the top or the base and the other of the top or base may comprise the ferromagnetic insert that interacts with the plurality of magnets to bias the top towards the base. Alternatively, the other of the top or the base may be made from a ferromagnetic material, that interacts with the plurality of magnets to bias the top towards the base. In this example, no separate ferromagnetic insert is present in the vibration isolator. The other of the top and base acts, or functions, as the ferromagnetic insert.

It is specified above that a central axis of a magnet may be aligned with, and be coaxial to, a central axis of a spring and that this enables easy disassembly and assembly of the vibration isolator, for example to replace springs to springs with other spring properties, as the magnet of each pair attracts and holds the spring in place relative to the magnet. Together with the first insert and the second insert, easy replacement of springs with different spring properties is enabled, without the need to modify the first insert and the second insert. Worded differently, the spring inserts of the top and the base does not have to fixate the springs securely to the top and the base as this may be achieved with magnetic force. During assembly, the magnets provide a magnetic force that secures the springs. This further allows for looser manufacturing tolerances of the first insert and the second insert. For example, the recesses of the first insert and the second insert, that receive, or locate, or position, the springs may have a diameter that is greater than the spring diameter. In addition, this also allows for looser tolerances for the diameter of the springs, or smaller diameter springs to be used. Thereby different diameter springs may be fitted, or mounted, to the vibration isolator.

The inserts may be removable allowing disassembly of the vibration isolator. In one alternative, the inserts may be securely mounted to the top and base, respectively.

The top may comprise a support interface, formed by a support axle, or spike, that has a first end arranged to contact and support the audio equipment, and a second narrowed or pointed end, or apex, or spike, that cooperates and contacts a support plate, or disc, arranged on, or in, the top. It is understood that this provides for a minimized contact surface between the support axle, or spike, and the planar support and in by extension between the audio equipment and flat surface the vibration isolator is placed on. This may further help to prevent unwanted resonances and vibrations to transfer between the audio equipment and the surface.

Alternatively, the support plate may form a part of the top body. This means that the support plate is not a separate part from the top body.

The first end of the axle, or spike, may form a shank, or axle body. The shank, or axle body, may protrude, or extend, from the second end. The shank, or axle body, may comprise threads. The threads may the threaded into a threaded female hole on the audio equipment to secure the vibration isolator to the audio equipment. The support spike may further comprise a securing member, or nut, with internal threads that interact with the threads of the shank, or axle body, to secure the support axle, to the audio equipment. This may prevent unthreading of the support axle, or spike, from the audio equipment due to for example vibrations.

It is understood that the support axle, or spike, may allow pivot movement relative to the planar support.

It is specified above that the support axle, or spike may cooperate with and contact a support plate arranged on, or in, the top. The support plate may be made from a metal.

In one embodiment the support plate may be made from brass. It is understood that brass has an ability to resonate at certain frequencies that are outside the intended vibration range of the isolator. The support interface may thus further isolate and reduce transfer of vibrations between the audio equipment, connected to the top, and the base and surface the vibration isolator is placed on.

In addition, it is understood that brass has a relatively high density compared to many other metals. This density can may help reduce the speed of the vibration waves and increase their absorption, resulting in an improved sound quality of the audio equipment.

The support plate may comprise a conical recess. The conical recess may locate the spike relative to the support plate, and the top.

The top may comprise a through opening arranged in a top portion of the top, and the first end of the support axle, or spike, may protrude through the opening in a direction facing the audio equipment, or in the second direction. Worded differently, the support axle, or spike, and the threaded shank, or axle body, may be positioned such that the threaded shank, or axle body, protrudes from the top, in a direction towards the audio equipment. The support axle, or spike, may comprise a skirt formed by an annular protrusion, arranged at the second end of the support axle, or spike, that protrudes from the radially outwards from the support axle, or spike, and forms a skirt. The skirt may have a diameter that is greater than a diameter of the through opening. The through opening may have an annular narrow portion may have a diameter that matches the threaded axle of the spike, and that is smaller than a diameter of the skirt. Worded differently, the through opening may form an annular narrow portion that interacts with the skirt and prevent the support axle, or spike, from being removed from the top when the top and base is assembled, or completely pulled through the opening of the top.

The support plate may be define a circular edge. The support plate may be disc shaped. The support plate may be attached, or mounted to the top. The top may comprise a recess arranged, or adapted, to receive and locate the support plate to the top. This means that the support plate may be replaced with a support plate of a different material. This allows for further configuration of the vibration isolator depending on the weight of the audio equipment as well as the frequencies the vibration isolator is to isolate.

In a further aspect, a system is provided, the system comprising: an audio equipment, and the vibration isolator according to any embodiment of the first aspect, wherein the base of the vibration isolator is placed on a surface and the top is coupled, or connected to, and supports, the audio equipment.

In a further aspect, a kit of parts may be provided, wherein the kit of parts allows for assembly of the vibration isolator for isolating audio equipment of different weights and isolation of vibrations of different frequencies, wherein the kit of parts comprises a top and the base, as well as a set of springs, wherein the set of springs comprises a plurality first set of springs that has first spring properties, such as spring constant, and a second set of springs that has second spring properties, wherein the first set and second set of springs are more than the available number of mounting positions of springs in the vibration isolator.

### Brief description of the drawings

A more complete understanding of the abovementioned and other features and advantages of the proposed technology will be apparent from the following detailed description of preferred embodiments in conjunction with the appended drawings, wherein:
- Fig. 1: shows a perspective view of the vibration isolator,
- Fig. 2: shows cross-sectional view along A-A of the vibration isolator of Fig. 1
- Fig. 3a: shows a top view of the top,
- Fig. 3b: shows a cross-sectional view of the top along B-B in Fig. 3a,
- Fig. 3c: shows a top view of the support, or brass disc,
- Fig. 3d: shows a cross-sectional view along C-C of the support, or brass disc, of Fig. 3c.
- Fig. 4a: shows a perspective view of the axle, or spike,
- Fig. 4b: shows a cross-sectional view of the axle, or spike shown in Fig. 4a,
- Fig. 5a: shows a top view of the spring second insert,
- Fig. 5b: s how a cross-sectional view along E-E of the spring second insert show in Fig. 5a,
- Fig. 6: shows a cross-sectional side view of the base,
- Fig. 7a: shows a top view of a cover,
- Fig. 7b: shows a cross-sectional a side view of the cover of Fig. 7a,
- Fig. 8a: shows a top view of the spring first insert; and
- Fig. 8b: shows a cross-sectional view of the along F-F of the spring first insert of Fig. 8a,
- Figs. 9a-9j: shows different spring configurations,
- Fig. 10: shows a front view of a speaker with two vibrations isolators,
- Fig. 11: shows a further example of a vibration isolator, and
- Fig. 12: shows a further example of a vibration isolator.

### Description of the drawings

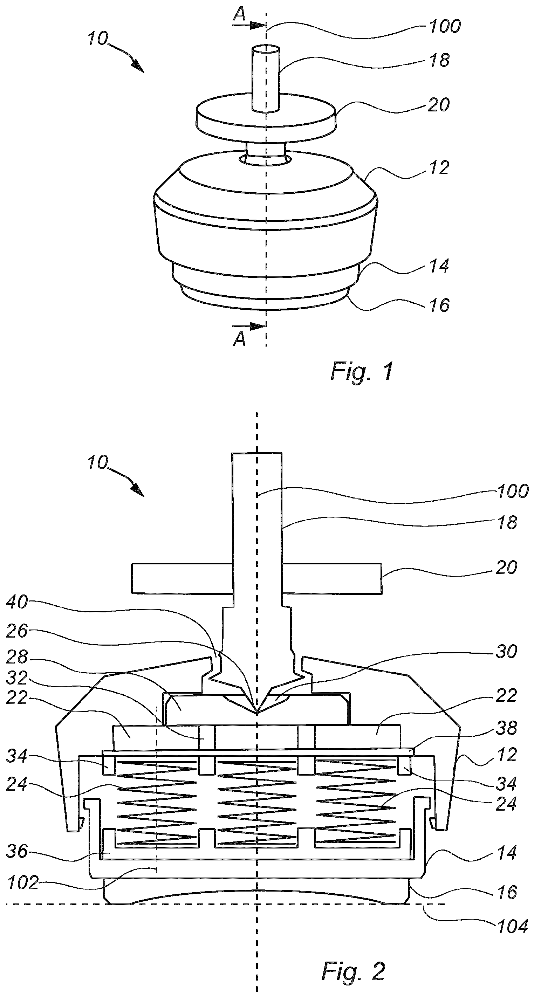

Fig. 1 shows a perspective view of the vibration isolator 10. The vibration isolator 10 has a top 12 and a base 14. The base further has a foot 16 in the form of an elastomer foot 16. The foot forms part of the base and is adapted, or arranged, to be placed on a surface, such as a flat surface. In addition, Fig. 1 shows an axle 18, or spike 18, that protrudes from the top 12 of the vibration isolator 10. The axle 18 forms part of a support interface and has a first threaded end that is arranged to interface or fasten to the axle 18 to an audio equipment (not shown). The support interface will be described in relation to Fig. 2 and Figs.3-4. Threaded onto the axle 18 is a securing member 20, or threaded disc 20, that locks the threaded axle 18 in place when the threaded axle 18 has been threaded into a threaded hole on an audio equipment.

Fig. 2 shows a cross sectional view along A-A of the vibration isolator shown in Fig. 1. The top 12 and the base 14 are aligned and define a central axis 100. The vibration isolator comprises a plurality of magnets 22 and a plurality of springs 24. The cross-sectional view shows three magnets 22 and three springs 24. The springs and the magnets are aligned and coaxial around an axis 102 and each spring and magnet may form a vibrator assembly pair. Each spring and each magnet of the plurality of springs and magnets are coaxial and form a pair.

Fig. 2 shows the support axle 18, or spike 18, with a narrowed or pointed end 26, or apex 26, or spike 26. The spike 18 contacts a planar support 28 arranged on, or in, the top. The planar support is shown in the form of a brass disc 28 that has a recess 30 arranged to limit movement of the spike relative the planar support. The brass disc 28 shown is attached to, or mounted to, the top 12. The recess 30 is forms a conical recess 30 in the disc 28.

Fig. 2 further shows the vibration isolator 10 placed on a flat surface 104, or plane 104. The base 14, and the foot 16, may be seen to lie, or define, or contact, the plane 104. Fig. 2 shows that the foot 16 lies in, or on, the plane 104. Shown in Fig. 2 is also a magnet insert 32 arranged to, or mounted to, the top 12. The magnet insert 32 locates, or positions the magnets 22 relative to the top 12, and relative to the other magnets 22. A cover 38 may be placed to cover the magnets 22 and the magnet insert 32, and reduce the accumulation of debris or metal particles to the magnets 22. In addition, the cover 38 can maintain the magnets 22 in position when the top 12 is disassembled from the base 14. The cover 38 is a non-ferromagnet material cover 38.

The top 12 further comprises a spring first insert 34, or first spring insert 34. The first insert 34 locates and maintains the springs in a position aligned with each spring central axis 102. In addition, the first spring insert 32 positions, or locates, each spring 24 relative to a respective magnet 22.

The base comprises a spring second insert 36, that locates and maintains the springs 24 in a position aligned with each spring central axis 102. Fig. 2 shows that each spring forms a pair with one magnet 22. Each spring of a pair is coaxial with a respective magnet 24.

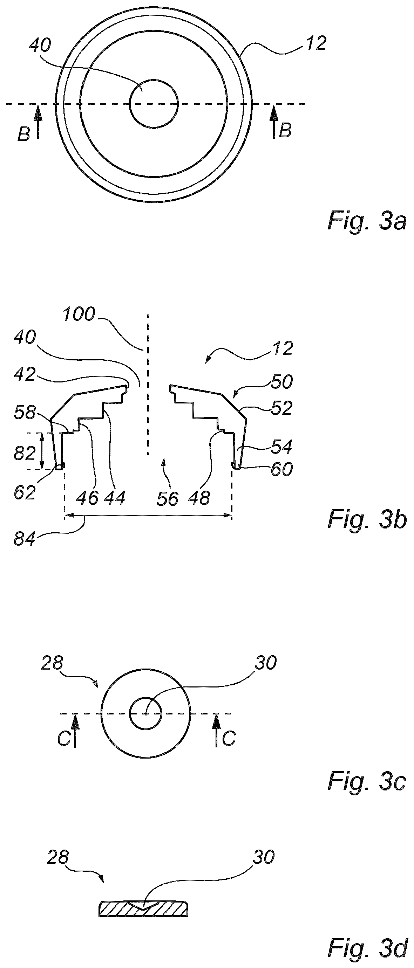

Fig. 3a shows a top view of the top 12. The top has a through hole 40, or opening, 40. As shown in Fig. 2 the threaded axle 18, or spike 18, protrudes, or extends, through the opening 40.

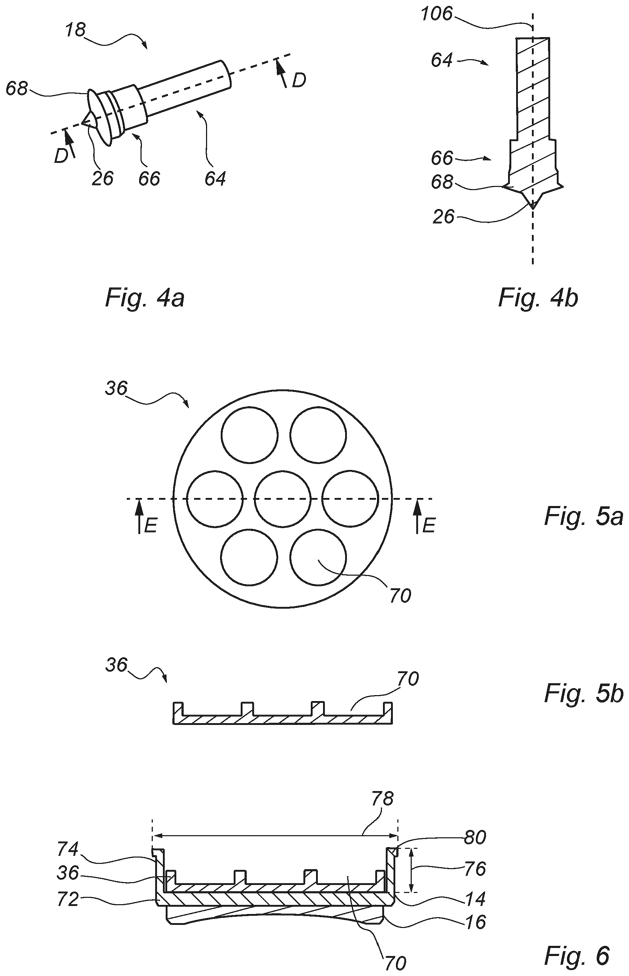

Fig. 3b shows a cross sectional view along B-B of top 12 shown in Fig. 3a. The opening 40 forms, or comprises, an annular narrow portion 42. The narrow portion 42 is arranged to interact with a skirt 68 of the threaded axle 18, or spike 18 and will be described in relation to Figs. **4****.**

The top 12 has a brass disc recess 44, or annular ledge 44, or recess 44. The recess 44 is arranged to receive and locate the brass disc 28. The recess 44 is connected, or joined, to the opening 40. The axle 18 may be inserted to the opening 40 and the brass disc 28 may be positioned in the recess 44. The brass disc 28 and the annular narrow portion 42 thus locate, or position, the axle 18 relative to the top 12.

The top 12 is shown having a magnet recess 46, formed by an annular ledge 46, or recess 46. The ledge 46 is sized to receive the magnet insert 32 and magnets 22. The magnet insert 32 and magnets 22 thus contact and cover the brass disc 18 when the magnet insert 32 and the magnets 22 are assembled to the top 12.

The top 12 further comprises an annular cover recess 48, or cover ledge 48, arranged to receive and locate, or position, the cover 38.

The top 12 has a top portion 50 with an outer top surface 52, and a sidewall 54. The top portion 50 and the sidewall 54 define, or have the shape of, an open cylinder. The top 50 has an opening 56, arranged at an end of the top that is opposite from the top portion 50, or outer top surface 52. The sidewall 54 protrudes from the top portion 50. The top portion 50 has a cylindrical shaped bottom 58, or bottom surface 58. The sidewall 54 protrudes from the bottom 58.

The top 12 defines a rim 60 formed by the sidewall 54, that encircles the opening 56. The rim 60 defines an overhang formed by a protrusion 62 that protrudes radially outwards from the sidewall 54 at the rim 60, towards the central axis 100, to form an annular overhang 62, or lip 62. The protrusion 62, or overhang 62, or lip 62, forms a second part of a lock that locks the top 12 to the base 14, when the top 12 is arranged to the base 14. The protrusion 62, or overhang 62, or lip 62, defines an inner diameter 84 of the sidewall 54 of the top 12. In addition, the sidewall 54 is shown having a top sidewall height 82.

Fig. 3c shows a top view of the axle 18, or spike 18, support, or brass disc 44. The brass disc 44 has the recess 30 arranged centrally in the disc 44.

Fig. 3d shows a cross sectional view along C-C of the support, or brass disc 44 shown in Fig. 3c. The recess 30 is shown as a conical shaped recess 30.

Fig. 4a shows a perspective view of the axle 18, or spike 18, and Fig. 4b shows a cross sectional view along D-D of the axle 18, or spike 18, shown in Fig. 4a. The axle 18, or spike 18, has a first end 64 and a second end 66. The first end 66 is threaded with machine threads. The second end 66 has the pointed end 26, or apex 26, of the axle 18, or the spike 18. The axle 18 has, or comprises, a skirt 68 formed by an annular protrusion 68 that protrudes from the axle 18, or spike 18, at the second end 66, radially outwards from a center axis 106. The skirt 68 locates the axle 18 in the through hole 40, and the axle 18 is prevented from being removed from the top 12, by the skirt having a diameter that is greater than the annular narrow portion 42 of the top 12. The axle 18, or spike 18, shown is made from metal, such as steel.

Fig. 5a shows a top view of the spring second insert 36, Fig. 5b show a cross sectional view along E-E of the spring second insert 36 show in Fig. 5a. The second spring insert 36 has a plurality of spring guiding, or locating, recesses 70. As shown in Fig. 2, the spring guiding, or locating, recesses 70 have a diameter that conforms, or matches, the diameter of the springs 24. Thereby the springs are located, and maintained in position when the vibration isolator is assembled. However, the spring guiding, or locating, recesses 70 can have a diameter that is greater than the diameter of the springs 24.

Fig. 6 shows a cross-sectional side view of the base 14 with the second spring insert 36 arranged to, or mounted to, the base 14. In addition, Fig. 6 shows the elastomer foot 16 forming part of the base 14. In addition, Fig. 6 shows that that the base 14 has a sidewall 74 that protrudes from a base bottom 72. The sidewall 74 has a height 76. At the end of the sidewall 74, opposite from the bottom 72, the sidewall 74 has an annular protrusion 80, or annular overhang 80, or lip 80, that protrudes radially outwards from the sidewall 74. The annular protrusion 80, or annular overhang 80, or lip 80 defines an outer diameter 78 of the sidewall 74. When the top 12 and base 14 are assembled the annular protrusion 80 of the base 14 interacts with the annular protrusion 62 of the top, to prevent the top 12 from coming apart from the base 14.

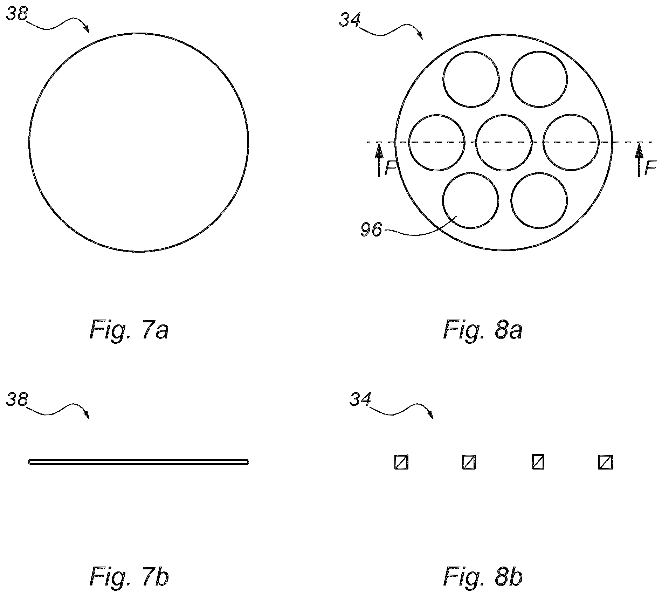

Figs. 7a-7b shows the magnet cover 38 that has a disc shape. The cover 38 is a non-ferromagnetic aluminium cover 38. However, the cover can also be a plastic cover 38. The cover 38 is positioned to cover the magnets 22, and prevent any magnetic debris from sticking to the magnets 22.

Fig. 8a shows a top view of the spring first insert 34; and Fig. 8b shows a cross sectional view of the along F-F of the spring first insert 34 of Fig. 8a. The first insert 34 has a plurality of through openings 96, or through holes 96, arranged to receive, and position, or locate, a respective spring 24 or in some configurations be devoid of a spring 24.

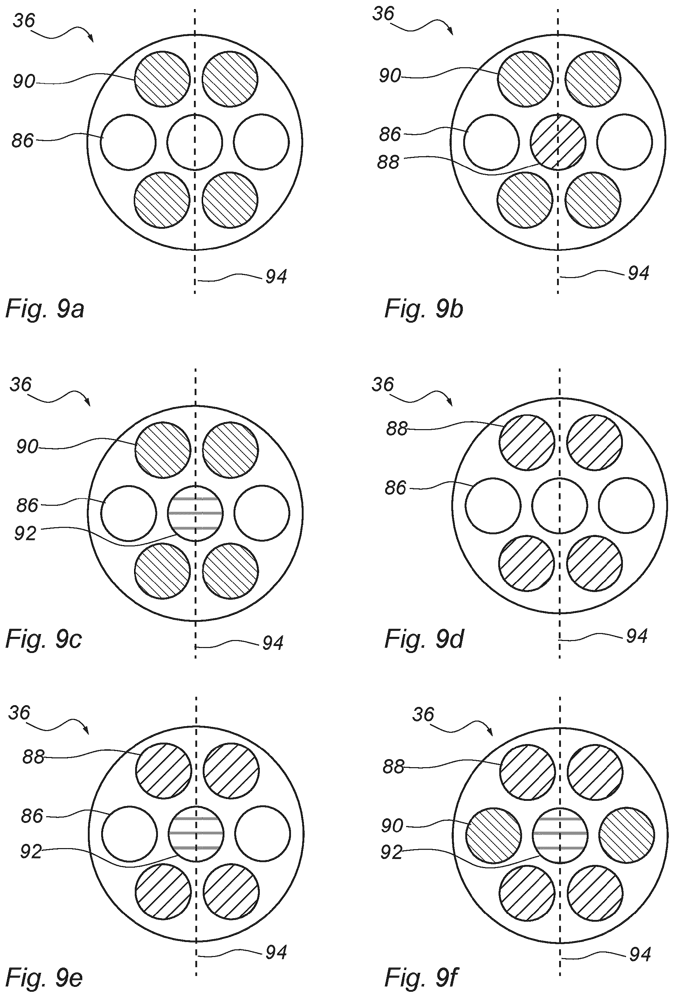

Figs. 9a-9f shows different spring configurations using different combinations of high stiffness springs 88, low stiffness springs 90 and spring positions 86 devoid of springs. The configurations allow to set up the vibration isolator for use with different weight audio equipment. Table 1 below shows a summary of possible combinations when four vibration isolators are used to support one audio equipment in the form of a speaker.

**Table 1**

| Speaker weight (kg) | Spring config. | Qty of low stiffness springs for four isolators | Qty of medium stiffness springs for four isolators | Qty of high stiffness springs for four isolators |
|---|---|---|---|---|
| 15-20 | Fig. 9a | 16 | - | - |
| 20-35 | Fig. 9b | 16 | 4 | - |
| 35-45 | Fig. 9c | 16 | - | 4 |
| 45-55 | Fig. 9d | - | 16 | - |
| 55-75 | Fig. 9e | - | 16 | 4 |
| 75-90 | Fig. 9f | 8 | 16 | 4 |
| 90-110 | Fig. 9g | - | 4 | 16 |
| 110-125 | Fig. 9h | 8 | 4 | 16 |
| 125-140 | Fig. 9i | - | 12 | 16 |
| 140-180 | Fig. 9j | - | 8 | 20 |

Fig. 9a shows a first combination that has four low stiffness springs 90 arranged at outer spring positions, and three centrally, arranged in a line, springs positions 86 devoid of any springs. The configuration shown in Fig. 9a thus only uses four springs 90 in total, and three positions are free of a spring. The four low stiffness springs are aligned about an isolator orientation axis 94.

Fig. 9b shows a second combination that uses four low stiffness 90 springs, and one medium stiffness spring 88 arranged in a "X" configuration, with the medium stiffness spring 88 arranged at a center position, with the remaining two outer positions 86 devoid, or free of, springs.

Fig. 9c shows a third combination that uses a combination of low stiffness springs 90, high stiffness springs 92 and spring positions 86 devoid of any spring. The springs are arranged in a "X" configuration as in the configuration of Fig. 9b with the difference that the center spring position has a high stiffness spring 92 instead of a low stiffness spring 90.

Fig. 9d shows a fourth combination that uses a combination of medium stiffness springs 88 and spring positions 86 devoid of any spring. The combination uses four medium stiffness springs 88 arranged pairwise at outer positions, and three center spring positions 86 devoid of any spring. The spring positions 86 devoid of any spring are aligned transverse to the axis 94.

Fig. 9e shows a fifth combination that differs from the combination in Fig. 9d in that the center position has a high stiffness spring 92 instead of being devoid of any spring.

Fig. 9f shows a sixth combination that uses two low stiffness 90 springs, four medium stiffness springs 88, and one centrally positioned high stiffness spring 88.

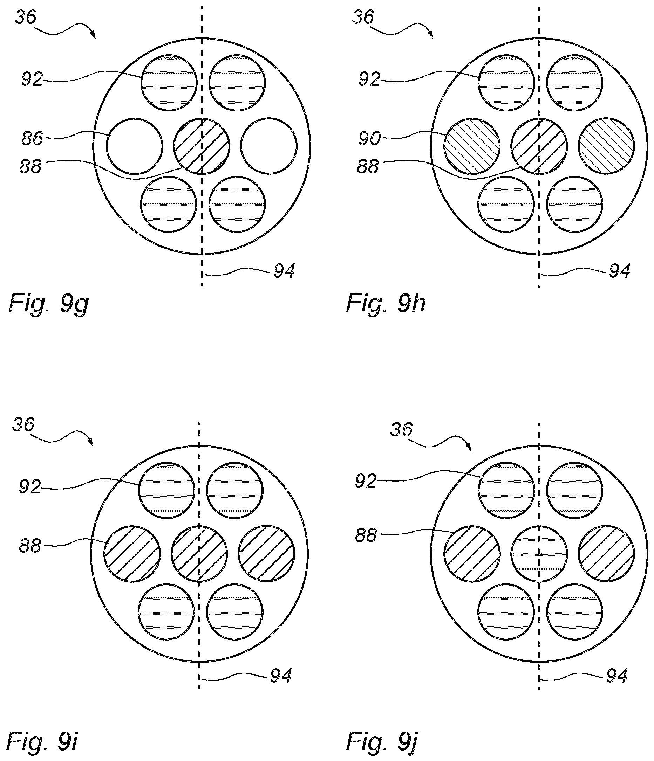

Fig. 9g shows a seventh combination that differs from the combination of Fig. 9e, in that the medium stiffness springs 88 have been replaced with high stiffness springs 92, and that the high stiffness spring 92, has been replaced with a medium stiffness spring 88. Two outer spring positions 86 are devoid of springs, and in total the configuration uses five springs.

Fig. 9h shows an eight combination that differs from the combination of Fig. 9g in that the springs positions 86 devoid of springs have been filled by two low stiffness springs 90.

Fig. 9i shows a ninth combination that differs from the combination of Fig. 9h in that the low stiffness springs 88 have been replaced by two medium stiffness springs 88.

Fig. 9j shows a tenth combination that differs from the combination of Fig. 9i in that the centrally positioned medium stiffness spring 88 of Fig. 9i has been replaced by a high stiffness spring 92. The configuration thus uses five high stiffness springs 92 and two medium stiffness springs 88.

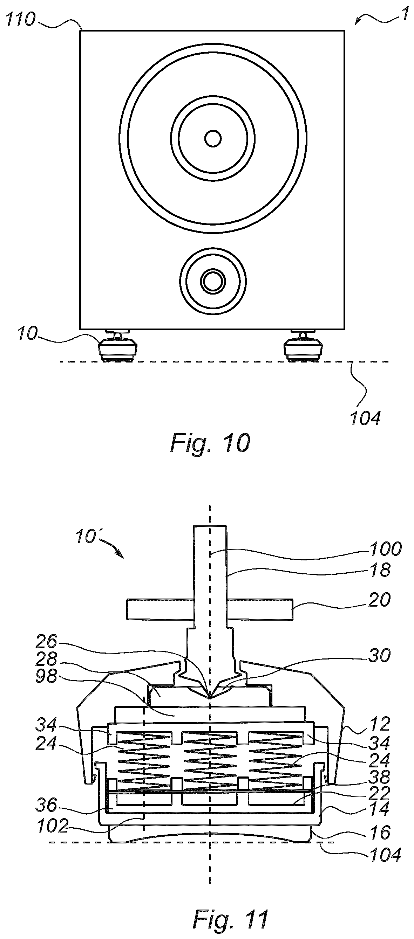

Fig. 10 shows a front view of a speaker system 1 that comprises a speaker 110 with four vibrations isolators 10 mounted to the speaker 110. The base of the vibration isolator 10 is placed on a surface 104, or plane 104, and the top 12 is coupled, or connected to, and supports the audio equipment 110. Fig. 11 shows a further example of the vibration isolator shown in Fig. 2. The vibration isolator of Fig. 11 differs from the vibration isolator of Fig. 2 in that the plurality of magnets (22), are arranged, or mounted to, the base (14), and the top (12) comprises a ferromagnetic spring insert (34) that interacts with the magnets, to bias the top (12) relative to the base (14). The magnets 22 thereby act to bias the top 12 towards the base 14.

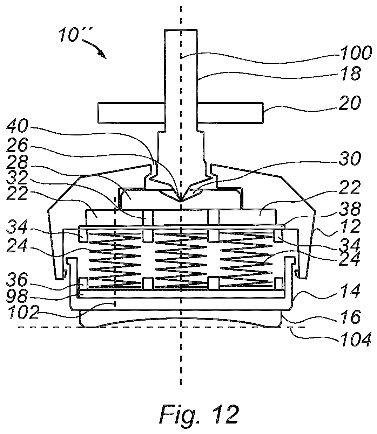

Fig. 12 shows a further example of the vibration isolator shown in Fig. 2. The vibration isolator 10'' of Fig. 11 differs from the vibration isolator of Fig. 2 in that base 14 comprises a ferromagnetic insert 98 located between the second insert 36 and the base 14. In the example shown in Fig. 12, the spring first insert 34 and the spring second insert 36 are non-ferromagnetic. The ferromagnetic insert 98 interacts with the plurality of magnets 22 arranged to, or mounted to, the top to bias the base 14 towards the top 12.

### Item list

- 1: system
- 10, 10', 10'': vibration isolator
- 12: top
- 14: base
- 16: foot
- 18: threaded axle, or spike
- 20: securing member, or threaded disc
- 22: magnet
- 24: spring
- 26: pointed end, or apex, or spike
- 28: support, or brass disc
- 30: recess
- 32: magnet insert
- 34: first insert
- 36: second insert
- 38: cover
- 40: through hole, or opening
- 42: annular narrow portion
- 44: brass disc recess, or annular ledge, or recess
- 46: magnet recess, annular ledge or recess
- 48: annular cover recess, or cover ledge
- 50: top portion
- 52: outer top surface
- 54: top sidewall
- 56: opening,
- 58: top bottom, bottom surface
- 60: top rim
- 62: protrusion, annular overhang, or lip
- 64: first end
- 66: second end
- 68: skirt
- 70: guiding, or locating, recesses
- 72: base bottom
- 74: base sidewall
- 76: base sidewall height
- 78: base sidewall outer diameter
- 80: protrusion, annular overhang, or lip
- 82: top sidewall height
- 84: top sidewall inner diameter
- 86: springless insert recess
- 88: medium stiffness spring
- 90: low stiffness spring
- 92: high stiffness spring
- 94: isolator orientation axis
- 96: opening, hole
- 98: ferromagnetic insert
- 100: central axis
- 102: magnet or spring axis
- 104: flat surface, plane
- 106: central axis of spike
- 110: audio equipment, speaker

## Claims

1. A vibration isolator (10) to support an audio equipment (110) that vibrates or is sensitive to vibrations, the vibration isolator comprising,
a base (14) and a top (12), the base (14) is adapted, or arranged, to be placed on a surface (104), and the top (12) is adapted, or arranged, to engage and support the audio equipment (110),
wherein the top (12) and base (14) are positioned relative to each other and define a central axis (100) transverse to the surface (104), and
an isolator assembly that couples the top (12) to the base (14) and vibration isolates the top (12) from the base (14) and at least partly inhibit the transfer of vibrations between the top (12) and the base (14), and
the isolator assembly comprises a plurality of springs (24) and a plurality of permanent magnets (22), wherein each of the plurality of springs forms a pair with one of the plurality of magnets, wherein the spring and magnet of each pair are aligned with, and coaxial to, each other, wherein
the plurality of springs (24) biases the top (12) apart from the base (14) in the axis direction (100), and
the plurality of magnets (22) biases the top (12) towards the base (14), in the axis direction (100).

2. The vibration isolator (10) of claim 1, wherein the plurality of magnets (22), are arranged to, or mounted to, the top (12.

3. The vibration isolator (10) of claim 1, wherein the plurality of magnets (22), are arranged to, or mounted to, the base (14).

4. The vibration isolator (10) of any claim 1-3, wherein the base (14) comprises a first spring insert (36) that locates, or positions, the springs (24), relative to the base (14), and the top (12) comprises a second spring insert (34) that locates, or positions, the springs (24), relative to the top (12), wherein the first spring insert (36) is aligned with the second spring insert (34).

5. The vibration isolator (10) of any claim 1-4, wherein the plurality of magnets (22) are arranged to, or mounted to, one of the top (12) and the base (14), and the other of the top (12) and the base (14) comprises a ferromagnetic insert (98) that interacts with the plurality of magnets (22) to bias the top (12) and base (14) towards each other.

6. The vibration isolator (10) of claim 4, wherein the plurality of magnets are arranged to, or mounted to, one of the top (22) and the base (14), and the spring insert (34, 36) of the other of the top (12) and the base (14) is ferromagnetic and interacts with the plurality of magnets (22) to bias the top (12) and base (14) towards each other.

7. The vibration isolator (10) of any claim 1-6, wherein the springs (24) comprises a first set of springs that has first spring properties and a second set of springs that has second spring properties, wherein the first properties are separate, or different, from the second properties.

8. The vibration isolator (10) of any claim 1-7, wherein the top (12) comprises a support interface, formed by a support axle (18), or spike (18), that has a first end (64) arranged to contact and support the audio equipment (110), and a second narrowed or pointed end (26), or apex (26), , that cooperates and contacts a support plate (28), or disc (28), arranged on, or in, the top (12).

9. The vibration isolator (10) of claim 8, wherein the top (12) comprises a through opening (40) arranged in a top portion (50) of the top (12), and the first end (64) of the support axle (18), or spike (18), protrudes through, or extends through, the opening (40) in a direction facing the audio equipment (110).

10. The vibration isolator (10) of claim 9, wherein the support axle (18), or spike (18), comprises a skirt (68) formed by an annular protrusion, arranged at the second end (66) of the support axle (18), or spike (18), that protrudes radially outwards from the support axle (18), or spike (18), wherein the skirt (68) has a diameter that is greater than a diameter of the opening (40).

11. The vibration isolator (10) of any claim 8-10, wherein the support plate (28) is made from a metal, in the form of brass.

12. The vibration isolator (10) of any claim 1-11, wherein the base (14) has a bottom portion (72) and a sidewall (74), wherein the sidewall (74) protrudes from the bottom portion (72), and the sidewall (74) of the base (14) has an outer diameter (78), and the top (12) has a top portion (50) and a sidewall (54) that protrudes from the top portion (50), and the sidewall (54) of the top (12) has an inner diameter (84), wherein the inner diameter (84) of the sidewall (54) of the top (12) is greater than the outer diameter (78) of the sidewall (74) of the base (14).

13. The vibration isolator (10) of claim 12, wherein the sidewall (74) of the base (14) defines an annular edge, or rim, and that has a lip (80) that protrudes radially outwards from the sidewall (74) relative to the central axis (100), and the sidewall (54) of the top (12) defines an annular edge (60) that has an overhang (62) formed by a protrusion that protrudes radially inwards from the sidewall (54) of the top (12) relative to the central axis (100), and wherein the lip (80) and overhang (62) interact to lock the top (12) to the base (14) in an end position of the top (12) relative to the base (14), in at least the central axis direction (100).

14. The vibration isolator (10) of any claim 1-14, wherein the base (14) has a foot (16), arranged at a bottom (72), or lower surface, of the base (14), arranged to contact the surface (104) the vibration isolator (10) is to be placed on, wherein the foot (16) is made from a polymer material, preferably a synthetic rubber.

15. A system (1) comprising:
- an audio equipment (110), and
- the vibration isolator (10) of any claim 1-14,
wherein the base (14) of the vibration isolator (10) is placed on a surface (104), or plane (104), and the top (12) is coupled, or connected to, and supports the audio equipment (110).
